# EUROPÄISCHE PATENTANMELDUNG

(11) **EP 1 045 269 A1**
(43) Veröffentlichungstag der Anmeldung: **18.10.2000**
(21) Anmeldenummer: 00108364.1
(22) Anmeldetag: 17.04.2000
(51) Int. Cl.: G02C 11/00

(54) **Brillengestell**

(30) Priorität: 16.04.1999 DE 29906871 U
(71) Anmelder: Herchet, Volker, 41065 Mönchengladbach (DE)
(72) Erfinder: Herchet, Volker, 41065 Mönchengladbach (DE)

(57) **Zusammenfassung**

Die Erfindung betrifft ein Brillengestell mit einer zwei Brillengläser fassenden Fassung und mit zwei an der Fassung angeordneten Bügeln. Die Bügel weiteren Anwendungen zuzuführen wird dadurch gelöst, daß zumindest einer der Bügel eine Haltevorrichtung zur Aufnahme eine Gegenstandes aufweist oder zumindest einer an der Fassung angebrachten Bügel einen hülsenartigen Hohlkörper aufweist, wobei der Durchmesser des Hohlkörpers geeignet ist, einen Gegenstand aufzunehmen.

## Beschreibung

Die Erfindung betrifft ein Brillengestell mit einer zwei Brillengläsern fassenden Fassung und mit zwei in der Fassung angeordneten Bügeln.

Bekannte Brillengestelle weisen eine Fassung auf, in welcher zwei Brillengläser eingefaßt sind. Um einen guten Sitz der Brille zu gewährleisten, weist eine herkömmliche Brille weiterhin zwei an der Fassung angeordnete Bügel auf. Diese Bügel sind ca. 10 cm bis 13 cm lang und liegen auf dem Ohren auf.

Nachteilig an den beschriebenen Bügeln ist, daß diese ausschließlich der Positionierung der Brille dienen. Es ist nicht möglich, die Bügel in einer anderweitigen Funktion zu nutzen.

Ausgehend von dem zuvor aufgezeigten Nachteil liegt der Erfindung die Aufgabe zugrunde, die Bügel einer handelsüblichen Brille einer weiteren Verwendung zuzuführen.

Die zuvor aufgezeigte Aufgabe wird erfindungsgemäß dadurch gelöst, daß zumindest einer der Bügel eine Haltevorrichtung zur Aufnahme eines Gegenstandes aufweist. Diese Haltevorrichtung ist so ausgestaltet, daß sie den Gegenstand aufnehmen kann. Hierbei ist zu denken an einen Klettverschluß zur Aufnahme von Stoffteilen oder einem Magneten zur Aufnahme von metallischen Gegenständen. Weitere Anwendungsgebiete sind denkbar und möglich.

In vorteilhafter Weise weist die Haltevorrichtung zumindest eine, zumindest teilweise am Bügel angeordnete Klammer zur Aufnahme des Gegenstandes auf. Der Gegenstand wird in diese Klammer eingedrückt, und die Klammer hält darauf hin den Gegenstand fest. Die Klammer kann einerseits als bewegliche Klammer oder als im Wesentlichen als starrer Clip ausgebildet sein. In eine solche Klammer kann z. B. ein Bleistift oder ein sonstiger Stift eingeführt werden. Der Stift ist somit schnell greifbar, hindert den Benutzer jedoch in keinster Weise bei seiner Arbeit.

In einer weiteren vorteilhaften Ausgestaltung weist die Haltevorrichtung einen hülsenförmigen Hohlkörper auf, wobei der Durchmesser des Hohlkörpers geeignet ist, den Gegenstand aufzunehmen. Ein hüslenförmiger Hohlkörper ist zur Aufnahme sehr kleiner Gegenstände geeignet. Diese können in den hülsenförmigen Hohlkörper eingeführt werden. Auch ist es denkbar, in den hülsenförmigen Hohlkörper, der z.B. eine Röhre sein kann, einen Geldschein einzustecken oder wiederum einen Stift darin zu transportieren.

Ein weiterer Gegenstand der Erfindung ist ein Brillengestell mit einer zwei Brillengläser fassenden Fassung und mit zwei an der Fassung angeordneten Bügeln, bei welchem zumindest einer der an der Fassung angeordneten Bügeln einen hülsenartigen Hohlkörper aufweist, wobei der Durchmesser des Hohlkörpers geeignet ist einen Gegenstand aufzunehmen. Ein im Bügel integrierter Hohlkörper kann während der Herstellung des Bügels berücksichtigt werden. Am Bügel ergeben sich keine vorstehenden Kanten, wodurch der Tragekomfort erhöht wird.

In einer vorteilhaften Ausgestaltung ist eine Verschlußeinrichtung vorgesehen, wobei die Verschlußeinrichtung den hülsenförmigen Hohlkörper zumindest teilweise verschließt. Mit einer solchen Verschlußeinrichtung kann der im Hohlkörper befindliche Gegenstand z.B. vor Nässe geschützt werden. Auch ist es möglich, besonders kleine Gegenstände in den hülsenförmigen Hohlkörper zu halten, ohne daß eine Gefahr besteht, daß diese aus dem Hohlköper herausfallen.

Das Brillengestell kann zumindest teilweise sowohl aus Kunststoff, aus Metall oder aus Horn gefertigt sein. Die jeweils benutzen Materialien können den Wünschen des Trägers angepaßt werden. Durch eine Kombination dieser Materialien ergibt sich eine enorme Produktvielfalt.

In einer vorteilhaften Ausgestaltung der Erfindung ist die Haltevorrichtung derart ausgestaltet, daß diese eine Zigarette aufnimmt. Der Hohlkörper der Haltevorrichtung, bzw. die angebrachte Klammer sind so ausgestaltet, daß gerade eine handelsübliche Zigarette darin aufgenommen werden kann. Somit entfällt das lästige Mitführen von Zigarettenschachteln.

In einer weiteren vorteilhaften Ausgestaltung sind die zwei Brillengläser derart ausgeführt, daß die Brille als Sonnenbrille dient.

Die Erfindung wird deutlich anhand der Zeichnung, bei welcher in den Figuren zeigen:
**Figur 1**
   Ein Brillengestell mit einem hülsenförmigen Hohlköper;
**Figur 2**
   Eine Verschlußeinrichtung eines hülsenförmigen Hohlkörpers;
**Figur 3**
   Ein Brillengestell mit einer Klammer;
**Figur 4**
   Ein Brillengestell mit einem im Bügel integriertem hülsenförmigen Hohlkörper.

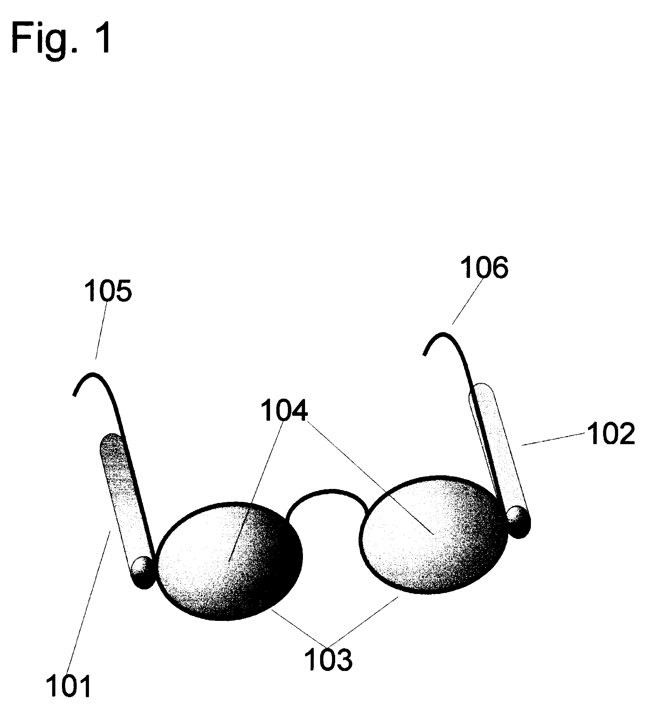

In **Figur 1** ist die die Brillengläser (104) fassende Fassung (103) zu erkennen. An der Fassung (103) sind die Bügel (105, 106) drehbar angebracht. Die Bügel (105, 106) sind an ihren Enden gekrümmt derart, daß diese sich hinter der Ohrmuschel verankern können. An den Bügeln (105, 106) sind die hülsenförmigen Hohlkörper (101, 102) angebracht. In die hülsenförmigen Hohlkörper (101, 102) können z.B. Zigaretten eingeführt werden. Diese sind vor Umwelteinflüssen geschützt. Auch ist es möglich in diese Hohlkörper einen Geldschein einzuführen.

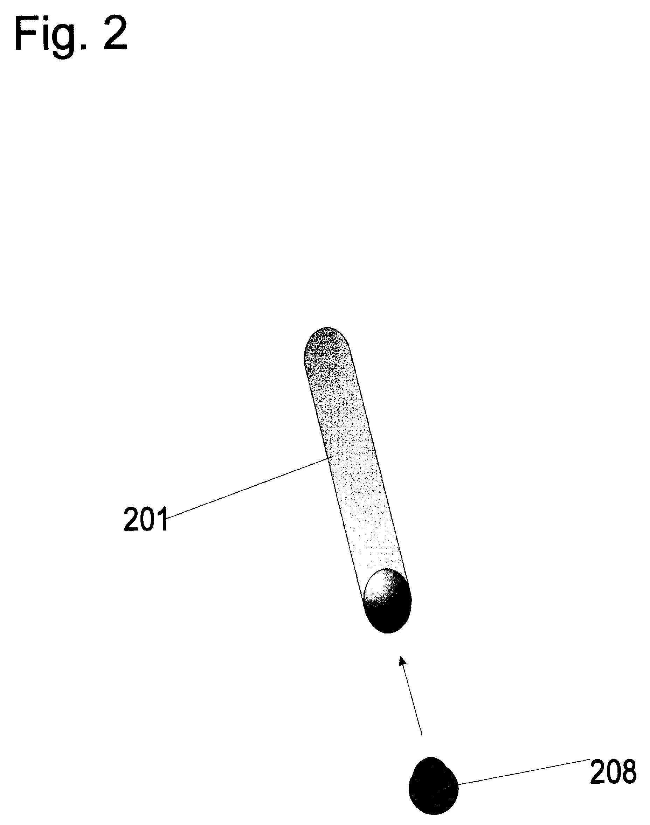

Mit der in **Figur 2** gezeigten Verschlußeinrichtung (208) ist es möglich, einen hülsenförmigen Hohlkörper (201) zu verschließen. Der hülsenförmige Hohlkörper (201) kann an einer Seite permanent geschlossen sein. Die zweite Seite des hülsenförmigen Hohlkörpers (201) wird mit dem Verschlußelement (208) geschlossen. Dadurch können insbesondere kleine Gegenstände, die dazu neigen aus dem Hohlkörper (201) herauszufallen, darin verschlossen werden.

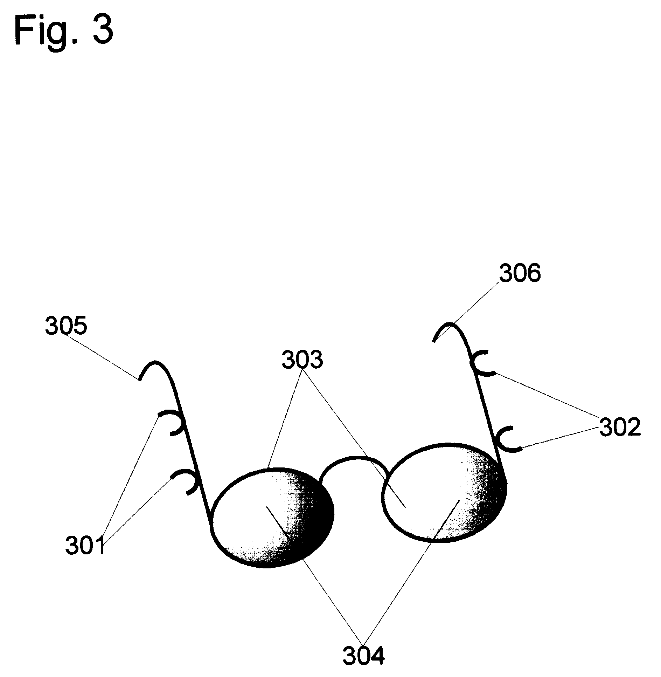

In Figur 3 ist ein Brillengestell mit einer Fassung (303), welche die Brillengläser (304) einfaßt dargestellt. An den Bügeln (305, 306) sind Klammern (301, 302) angebracht. Diese Klammern (301, 302) können dazu benutzt werden, Stifte, Zigaretten oder sonstige stabförmige Gegenstände aufzunehmen.

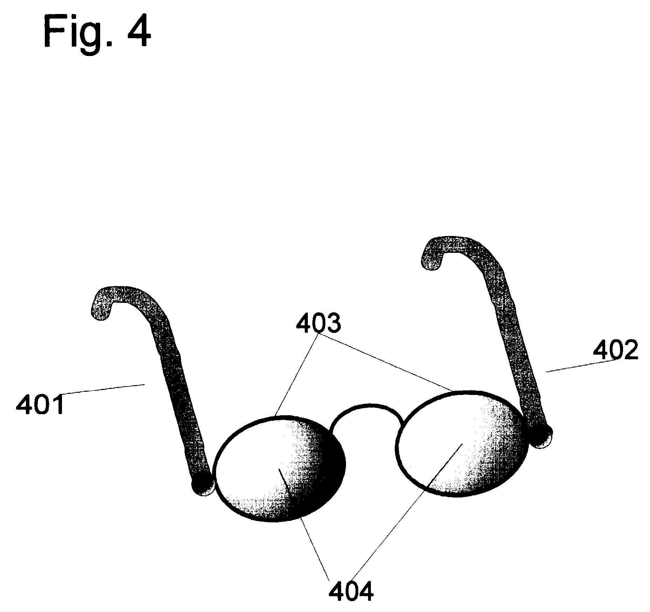

Das in Figur 4 dargestellte Brillengestell, bestehend aus der Fassung (403) und den Brillengläsern (404) sowie den Bügeln (401 und 402) unterscheidet sich von den vorhergezeigten darin, darin das in den Bügeln (401, 402) bereits Hohlköper eingelassen sind. Die Hohlkörper in den Bügeln (401, 402) können mit einem Verschlußelement (nicht dargestellt) verschlossen werden. Es ist möglich, die Hohlkörper transparent auszuführen und mit farbigen Perlen zu füllen. Nachdem die Bügel (401, 402) mit den farbigen Perlen gefüllt worden sind, können diese mit einem Verschlußelement (nicht dargestellt) verschlossen werden. Für den Benutzer ergibt sich die Möglichkeit individuell die Farbe der Bügel mit Hilfe der farbigen Perlen anzupassen. Auch ist es möglich, eine Flüssigkeit, insbesondere eine farbige Flüssigkeit in einen solchen Hohlköper einzuführen.

## Patentansprüche

1. Brillengestell mit einer zwei Brillengläser fassenden Fassung und mit zwei an der Fassung angeordneten Bügeln, **dadurch gekennzeichnet, daß**
zumindest einer der Bügel eine Haltevorrichtung zur Aufnahme eines Gegenstandes aufweist.

2. Brillengestell nach Anspruch 1,
**dadurch gekennzeichnet, daß**
die Haltevorrichtung zumindest eine, zumindest teilweise am Bügel angebrachte Klammer zur Aufnahme des Gegenstandes aufweist.

3. Brillengestell nach Anspruch 1,
**dadurch gekennzeichnet, daß**
die Haltevorrichtung hülsenförmig Hohlkörper ist, wobei der Durchmesser des Hohlkörpers geeignet ist, den Gegenstand aufzunehmen.

4. Brillengestell mit einer zwei Brillengläser fassenden Fassung und mit zwei an der Fassung angeordneten Bügeln,
**dadurch gekennzeichnet, daß**
zumindest einer der an der Fassung angeordneten Bügel einen hülsenartigen Hohlkörper aufweist, wobei der Durchmesser des Hohlkörper geeignet ist, einen Gegenstand aufzunehmen.

5. Brillengestell nach Anspruch 3 oder 4,
**dadurch gekennzeichnet, daß**
eine Verschlußeinrichtung vorgesehen ist, wobei die Verschlußeinrichtung der hülsenförmige Hohlkörper zumindest teilweise verschließt.

6. Brillengestell nach einem der Ansprüche 1 bis 5,
**dadurch gekennzeichnet, daß**
das Brillengestell zumindest teilweise aus Kunststoff gefertigt ist.

7. Brillengestell nach einem der Ansprüche 1 bis 6,
**dadurch gekennzeichnet, daß**
das Brillengestell zumindest teilweise aus Metall gefertigt ist.

8. Brillengestell nach einem der Ansprüche 1 bis 7,
**dadurch gekennzeichnet, daß**
das Brillengestell zumindest teilweise aus Horn gefertigt ist.

9. Brillengestell nach einem der Ansprüche 1 bis 8,
**dadurch gekennzeichnet, daß**
die Haltevorrichtung eine Zigarette aufnimmt.

10. Brillengestell nach einem der Ansprüche 1 bis 9,
**dadurch gekennzeichnet, daß**
der in den Bügel integrierte Hohlkörper transparent ist und eine Flüssigkeit aufnehmen kann.
